# EUROPÄISCHE PATENTSCHRIFT

(11) **EP 3 405 354 B1**
(45) Veröffentlichungstag und Bekanntmachung des Hinweises auf die Patenterteilung: **14.08.2019**
(21) Anmeldenummer: 17700694.7
(22) Anmeldetag: 20.01.2017
(51) Int. Cl.: F16C 17/02, F16C 33/04

(54) **DREH-GLEITLAGER**
ROTATION BEARING WITH A SLIDING CONTACT
PALIER ROTATIF LISSE

(30) Priorität: 20.01.2016 EP 16152114
(43) Veröffentlichungstag der Anmeldung: 28.11.2018
(73) Patentinhaber: Aurotec GmbH, 4844 Regau (AT)
(72) Erfinder: ZIKELI, Stefan, 4844 Regau (AT); RAUCH, Ernst, 4840 Vöcklabruck (AT)
(74) Vertreter: Sonn & Partner Patentanwälte
(86) Internationale Anmeldenummer: PCT/EP2017/051129
(87) Internationale Veröffentlichungsnummer: WO 2017/125520

(56) Entgegenhaltungen:
- WO-A2-2007/063330
- US-A- 2 761 691
- US-A- 5 188 381
- US-A1- 2014 332 299

## Beschreibung

Die Erfindung betrifft ein Dreh-Gleitlager zur freigebbaren Lagerung einer Welle, insbesondere einer Radwelle oder Fixierwelle eines Transportmittels wie z.B. eines Fahrrads, Scooters, Golftrolleys oder Rollstuhls.

Derartige Dreh-Gleitlager zur vorübergehenden Aufnahme von Wellen oder Wellenstummeln sind im Stand der Technik bekannt. Allgemein unterbindet ein solches Lager zwei Freiheiten bzw. Freiheitsgrade einer Translation in radialer Richtung seines kreisförmigen Querschnitts, d.h. quer zur Drehachse. Es wird daher auch als Radiallager, oder im speziellen Fall radiales Gleitlager, bezeichnet.

Die GB 2155118 B beschreibt die Lagerung einer Welle des Schneidrotors eines Rasenmähers. Dabei ist eine teilbare Klauenkupplung vorgesehen, welche am Schneidrotor lösbar angeordnet ist, sodass ein Teil der Klauenkupplung abgebaut und die Welle in Achsrichtung aus dem Rotor gezogen werden kann. Das Wechseln der Rotorwelle ist somit vergleichsweise kompliziert, arbeits- und zeitaufwändig.

In der EP 0303558 B1 ist ein Dreh-Gleitlager für Achsen und Schreibwalzen in Büromaschinen beschrieben, wobei ein herausnehmbarer Lagerkörper in einem Flächenbauteil der Büromaschine selbstsichernd montiert ist. Zum Entnehmen der Welle aus dem Lager muss der Lagerkörper selbst entfernt und entlang der Drehachse von der Welle abgezogen werden.

Zur Lagerung und Befestigung von Wellenenden beschreibt die EP 2 300 243 B1 die axiale Fixierung eines Wellenstutzens stirnseitig in einem Lagergehäuse bzw. einer Lagerbuchse, wobei das Wellenende in eine speziell ausgeformte Gleitlagerbuchse eingebracht wird und die in der Gleitlagerbuchse angebrachten elastisch verformbaren Zacken in den am Wellenende angebrachten Bund einrasten und so die Welle vor axialer Verschiebung sichern.

Weiters sind im Stand der Technik Bolzenaufnahmen und -halterungen bekannt, die nicht zur Drehlagerung von Wellen bestimmt oder geeignet sind.

Die DE 86 32 416.0 U1 zeigt ein Schnapplager für die Aufnahme eines Rundprofils, wobei die Lagerkontur an einer Seite eine verjüngte Einführöffnung bildet. Die Abmessung der Einführöffnung ist somit etwas kleiner als der Durchmesser des Lagers und kleiner als das einzulagernde Rundprofil. Dadurch wird das Schnapplager beim Einschnappen eines Rundprofils im Bereich einer Zunge so weit ausgedehnt bzw. deformiert, dass das zu haltende Profil einschnappen kann. Die Zunge des Schnapplagers kann sich ungewollt erweitern oder ausdehnen, wodurch das zu sichernde Profil aus dem Schnapplager freigegeben wird. Um dies zu verhindern, ist zusätzlich ein Sicherungsbügel seitlich am Schnapplager vorgesehen. Ein in die Lagerkontur eingeführtes Rundprofil kann mit dem Sicherungsbügel in dem Schnapplager gesichert werden. Aufgrund der notwendigen Verformbarkeit des Lagers eignet sich dieses Schnapplager nicht als Dreh-Gleitlager.

Des Weiteren sind Kopplungen zum Befestigen von Werkzeugen wie Ladeschaufeln, Baggerschaufeln an Antriebs- oder Zugmaschinen bekannt.

Derartige Kopplungen sind beispielsweise aus der WO 00/14342 A1, der DE 69 028 453 T2, der US 6 308 442 B1 oder der EP 0 952 013 A1 bekannt. Den Lösungen der genannten Dokumente ist gemein, dass jeweils naturgemäß keine Dreh-Gleitlager beschrieben sind und sich die zur Kopplung gezeigten Bolzenaufnahmen auch nicht als Dreh-Gleitlager eignen. Stattdessen wird im Gegenteil ein Anbaugerät möglichst unbeweglich an der Kopplung bzw. an der jeweiligen Antriebsmaschine fixiert, was in der Regel durch die Aufnahme mehrerer, radial versetzt angeordneter Bolzen erzielt wird. Die Form der gezeigten Aufnahmen und die Fixierung mittels diverser Sicherungsbügel eignet sich daher regelmäßig nicht zur drehbaren Lagerung von Wellen sondern zielt auf eine stabile Fixierung der aufgenommenen Bolzen ab.

Die US 2 761 691 A zeigt einen Golf-Trolley mit zwei Rädern, deren Achse drehbar in einer L-Leiste gelagert ist und mit verschwenkbaren Bügeln gehalten wird. Die Bügel weisen eine zur Schwenkachse konzentrische Gleitfläche auf.

Die US 5 188 381 A zeigt eine Halteranordnung für einen Koffer zur Lagerung einer Achse für Räder. Die Achse ist dabei drehbar in einem Einschub der Halteranordnung gelagert und wird mit einem zweiten Einschub eines verschwenkbaren Hebels fixiert. Die Schwenkachse des Hebels ist auf einer Mittellinie des Einschubs der Halteranordnung angeordnet.

Die WO 2007/063330 A2 betrifft eine Golftasche mit Rädern, welche drehbar auf einer Achse gelagert sind. Die Achse wird mittels eines verschwenkbaren Clips in einer kanalförmigen Ausnehmung im Boden der Golftasche gelagert.

Die US 2014/332299 A1 zeigt einen Golftrolley mit einem Fahrgestell, das drei Räder an mindestens zwei Achsen lagert, von denen eine Achse eine Antriebsachse ist und die andere Achse durch eine frei drehbar gelagerte Welle gebildet ist. Ein mobiler Lagerteil ist hier nicht gezeigt.

Bei der Vorrichtung gemäß der US 2002/125667 A1 ist eine Achse in C-förmigen Klammern aufgenommen und gelagert. Ein mobiler Lagerteil ist auch hier nicht gezeigt.

Es ist eine Aufgabe der vorliegenden Erfindung, ein Dreh-Gleitlager der eingangs angeführten Art vorzuschlagen, aus dem eine aufgenommene Welle schnell und einfach freigegeben werden kann.

Zur Lösung dieser Aufgabe wird ein Dreh-Gleitlager mit einem statischen Lagerteil und einem mobilen Lagerteil vorgeschlagen, welche jeweils eine Teilschale mit einer Gleitfläche aufweisen, wobei die Gleitflächen der Lagerteile relativ zur Drehachse in Drehrichtung des Dreh-Gleitlagers jeweils innerhalb eines Winkelbereichs von höchstens 180° angeordnet sind (wobei sich der Winkelbereich der Gleitfläche des statischen Lagerteils vom Winkelbereich der Gleitfläche des mobilen Lagerteils zumindest teilweise unterscheidet) und in einer geschlossenen Ruhestellung des Dreh-Gleitlagers die Teilschalen aller Lagerteile zusammen eine Lagerbuchse des Dreh-Gleitlagers bilden, wobei der mobile Lagerteil zur Öffnung des Dreh-Gleitlagers gegenüber dem statischen Lagerteil um eine Schwenkachse verschwenkbar angeordnet ist, sodass in einer geöffneten Freigabestellung des Dreh-Gleitlagers eine darin gelagerte Welle freigegeben ist, und wobei der mobile Lagerteil so geformt ist, dass aufgrund der Position seiner Gleitfläche relativ zur Drehachse eine Translation einer im Dreh-Gleitlager aufgenommenen Welle quer zur Drehachse und in Richtung der Schwenkachse des mobilen Lagerteils oder in die Gegenrichtung verhindert wird.

Die Gleitflächen der Lagerteile sind dabei nicht notwendigerweise zusammenhängend, d.h. sie können jeweils auch durch mehrere Gleitflächenabschnitte gebildet sein. Dementsprechend muss auch der jeweilige Lagerteil (statisch oder mobil) selbst nicht aus einem Stück bestehen, sondern kann auch durch Aneinanderreihen mehrerer Lagerteilabschnitte und somit mehreren Teillagerflächen gebildet werden. Außerdem können die Gleitflächen im Allgemeinen einen beliebigen Verlauf aufweisen, d.h. es kann sich auch um ebene Gleitflächen bzw. Gleitflächenabschnitte handeln. Weiters kann die Breite, d.h. die Abmessung parallel zur Drehachse des Dreh-Gleitlagers, des mobilen Lagerteils und des statischen Lagerteils unterschiedlich sein. Die Schwenkachse des mobilen Lagerteils wird vorzugsweise parallel zur Drehachse des Dreh-Gleitlagers ausgerichtet sein, sodass Querkräfte auf den mobilen Lagerteil minimiert werden. Die geschlossene Ruhestellung (in der die Teilschalen aller Lagerteile zusammen eine Lagerbuchse des Dreh-Gleitlagers bilden) entspricht jener Stellung, welche das Dreh-Gleitlager auch im Betrieb mit einer darin gelagerten Welle einnimmt. Die Ruhestellung kann daher auch als Betriebsstellung bezeichnet werden.

Für eine besonders stabile und sichere Aufnahme und Lagerung einer Welle ist es vorteilhaft, wenn der statische Lagerteil einen Anschlag aufweist, welcher in der geöffneten Freigabestellung des Dreh-Gleitlagers eine Translation einer im Dreh-Gleitlager aufgenommenen Welle quer zur Drehachse und aus der Teilschale des statischen Lagerteils (insbesondere wobei die Welle von der oder den Gleitflächen der Teilschale des statischen Lagerteils entfernt wird) begrenzt. Vorzugsweise können der Anschlag und die Teilschale des statischen Lagerteils zusammen eine Entnahme einer aufgenommenen Welle nur durch eine geradlinige Translation quer zur Drehachse aus dem statischen Lagerteil blockieren. Es ist somit aufgrund des Anschlags nicht möglich, eine Welle in eine Richtung aus der Teilschale des statischen Lagerteils und vollständig aus dem statischen Lager heraus zu führen. Vielmehr wird eine Bewegungsabfolge mit Bewegungen in unterschiedliche Richtungen erzwungen, um die Welle am Anschlag vorbei zu führen und aus dem Lager zu entnehmen. Dies hat den Vorteil, dass eine unbeabsichtigte Freigabe der Welle alleine nicht bereits zum Verlassen des Lagers führt, weil zusätzlich die richtige Bewegungsabfolge durchgeführt werden muss.

Um dabei ein bewusstes Herausnehmen der Welle nicht unnötig zu erschweren ist es günstig, wenn der statische Lagerteil eine Führung bildet, welche eine Öffnung zur Einführung einer Welle in den statischen Lagerteil aufweist und welche in der Teilschale des statischen Lagerteils endet, wobei die Führung einen zumindest abschnittsweise schneckenförmigen Verlauf aufweist. Als schneckenförmig wird in diesem Zusammenhang ein spiralig gewundener oder geschwungener Verlauf ausgehend der Teilschale des statischen Lagerteils bezeichnet. Geometrisch entspricht ein solcher Verlauf etwa einem kreisbogenförmigen Verlauf mit zunehmendem Radius. Mit dem schneckenförmigen Verlauf wird eine Führung entlang eines Bogenabschnitts erzielt, sodass der durchzuführende Bewegungsablauf durch die Führung vorgegeben wird. Bei einer solchen Anordnung kann außerdem bei Einführung einer Welle in den statischen Lagerteil der mobile Lagerteil aus der Ruhestellung verdrängt werden, sodass keine zusätzliche Betätigung zur Öffnung des Lagers erforderlich ist. Die Verdrängung wird dabei durch den abschnittsweise zur Schwenkrichtung des mobilen Lagerteils im Wesentlichen parallelen Verlauf der Führung erzielt. D.h. die in der Führung fortbewegte Welle verursacht eine Verschwenkung des mobilen Lagerteils.

Außerdem hat es sich als besonders günstig herausgestellt, wenn der mobile Lagerteil aus der geschlossenen Ruhestellung des Dreh-Gleitlagers nur in Richtung der geöffneten Freigabestellung des Dreh-Gleitlagers verschwenkbar ist. D.h. ein Verschwenken in die Gegenrichtung wird, beispielsweise durch geeignete Anschlagmittel, blockiert. Eine derartige Begrenzung der Bewegung des mobilen Lagerteils hat den Vorteil, dass der kreisförmige Querschnitt des Lagers einen in der Ruhestellung definierten Innendurchmesser nicht unterschreitet, insbesondere auch nicht unter der Wirkung einer Rückstellkraft wie weiter unten erläutert. Auf diese Weise wird ein lokaler Druck des mobilen Lagerteils auf eine gelagerte Welle und eine damit einhergehende Erhöhung der Reibung oder gar ein Einklemmen der Welle verhindert.

Weiters ist es vorteilhaft, wenn die Gleitflächen des statischen und des mobilen Lagerteils einen durchgehenden, in der Ruhestellung relativ zur Drehachse des Dreh-Gleitlagers kreisbogenförmigen Verlauf aufweisen. Insbesondere können die Gleitflächen jeweils der Mantelfläche einer Zylindersegments entsprechen, dessen Achse die Drehachse des Dreh-Gleitlagers ist. Der Vorteil derart geformter Gleitflächen besteht in der insgesamt größeren Kontaktfläche zwischen Lager und Welle im Vergleich zu anderen Formen, wodurch die Reibung für die Dreh-Gleitlagerung reduziert wird.

Besonders vorteilhaft ist es, wenn die Gleitfläche des statischen Lagerteils relativ zur Drehachse des Dreh-Gleitlagers einen halbkreisförmigen Verlauf aufweist. Mit dieser Form kann bei vorgegebenem Lagerdurchmesser und Lagerbreite die maximale Kontaktfläche erzielt werden, was zu einer Minimierung der Reibung führt.

Es hat sich als günstig herausgestellt, wenn das mobile Lagerteil gegen die Rückstellkraft eines Rückstellelements, insbesondere einer Rückstellfeder, aus der Ruhestellung verschwenkbar ist. Insbesondere erfordert eine Überführung des mobilen Lagerteils aus der Ruhestellung in die Freigabestellung eine Überwindung der Rückstellkraft des Rückstellelements. Das Rückstellelement kann insbesondere auch ein hydraulisches Rückstellelement, z.B. einen hydraulischen Bremszylinder, ein pneumatisches Rückstellelement, z.B. eine Gasfeder, oder ein elektrisches Rückstellelement, z.B. ein elektrisches Bremssystem oder ein elektrischer Linearantrieb, sein. Aufgrund der resultierenden Rückstellwirkung verbleibt der mobile Lagerteil unabhängig von der Orientierung des Lagers in der geschlossenen Ruhestellung. Außerdem kann auf diese Weise ein sicheres und reproduzierbares Einschnappen der Welle in das Lager erzielt werden.

In diesem Zusammenhang ist es besonders günstig, wenn der mobile Lagerteil an einem Ende eines zweiarmigen Hebels gebildet ist. So kann aufgrund der erzielbaren Hebelwirkung gegen die Rückstellkraft des Rückstellelements ein Rückstellelement mit vergleichsweise hoher Rückstellkraft eingesetzt werden, ohne die Bedienung des Lagers nachteilig zu erschweren.

Im Zusammenhang mit einer solchen Führung ist es vorteilhaft, wenn der Durchmesser der Führung zur Öffnung hin zunimmt. Das erleichtert die Einführung einer Welle und vermeidet ein Klemmen oder Verkeilen der Welle in der Führung.

Als besonders bevorzugte Anwendung der vorliegenden Erfindung ist eine Vorrichtung, insbesondere ein Fahrgestell, mit zumindest zwei Dreh-Gleitlagern der vorstehend definierten Art vorgesehen, wobei die zumindest zwei Dreh-Gleitlager eine gemeinsame Drehachse aufweisen. Eine solche Vorrichtung kann beispielsweise ein leicht und rasch zerlegbares Fahrgestell bilden, wenn die beiden Lager zur Aufnahme einer Radwelle vorgesehen sind.

Es hat sich bei einer derartigen Vorrichtung oder einem derartigen Fahrgestell als besonders günstig erwiesen, wenn der mobile Lagerteil der zumindest zwei Dreh-Gleitlager jeweils an einem Ende eines zweiarmigen Hebels gebildet ist, wobei die den mobilen Lagerteilen gegenüber liegenden Enden der Hebel mit einem gemeinsamen Betätigungsbügel, insbesondere in Form eines Querbolzens parallel zur Drehachse, verbunden sind. Damit kann eine rasche Freigabe einer aufgenommenen Welle durch einfache Bedienung sämtlicher Drehlager (d.h. zugleich) erzielt werden.

Weiters kann der statische Lagerteil der zumindest zwei Dreh-Gleitlager jeweils eine Führung bilden, welche eine Öffnung zur Einführung einer Welle in den statischen Lagerteil aufweist und welche in der Teilschale des statischen Lagerteils endet, wobei die Öffnungen der Führungen der zumindest zwei Dreh-Gleitlager an einer Unterseite der Vorrichtung angeordnet sind. Die Unterseite ist insbesondere bei Anwendungen mit Radwellen jene Seite an der im Betrieb die Räder den Boden berühren. D.h. es ist eine einem Aufbau, z.B. zum Transport von Gegenständen, gegenüber liegende Seite. Bei dieser Anordnung der Öffnungen wird eine Verdrängung der mobilen Lagerteile bei Einführung einer Welle, z.B. auch gegen die Rückstellkraft eines Rückstellelements, vorteilhaft durch die Schwerkraft und das Gewicht der Vorrichtung unterstützt.

Die Lagerteile bzw. die dadurch gebildeten Gleitflächen können unterschiedliche Materialien und/oder Materialkombinationen aufweisen, welche vorzugsweise auf die Lagerung und Lagerschmierung abgestimmt sind. Als bevorzugte Materialien oder Materialkombinationen kommen in Betracht: Metalle, Polymere und Kunststoffe, kohlenstofffaserverstärkter Kunststoff, Sintermetalle, und Keramiken.

Eine bevorzugte Anwendung von Dreh-Gleitlagern zur freigebbaren Lagerung einer Welle ist jene in einem Fahrgestell eines Golftrolleys, wobei das Fahrgestell mindestens drei Räder an mindestens zwei Achsen lagert, von denen eine Achse durch eine frei drehbar gelagerte Welle gebildet ist, wobei die Welle in zwei Schnapplagern herausnehmbar am Fahrgestell gelagert ist. Dies betrifft insbesondere Golftrolleys zum im Wesentlichen aufrechten Transport einer Golftasche. Dabei ist es günstig, wenn die Welle zur ausreichenden seitlichen Stabilisierung des Golftrolleys trotz des relativ hohen Schwerpunkts im beladenen Zustand eine entsprechende Mindestlänge aufweist. Um dabei nicht die Transportfähigkeit des Golftrolleys aufgrund seiner seitlichen Abmessungen einzuschränken, ist es vorteilhaft, wenn der Golftrolley auf besonders einfache Weise, rasch und mit wenigen Handgriffen zerlegt werden kann, d.h. insbesondere die relativ lange Achse vom Fahrgestell getrennt werden kann. Besonders bevorzugt ist somit die Anwendung der freigebbaren Dreh-Gleitlager bei einer Transportvorrichtung gemäß der WO 2013/052977 A1, wobei vorzugsweise die Dreh-Gleitlager nach den oben beschriebenen Varianten mit den jeweils beschriebenen Vorteilen zum Einsatz kommen können.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 eine schaubildliche Ansicht eines Golftrolleys mit einer in einem erfindungsgemäßen Dreh-Gleitlager gelagerten Hinterachse;
Fig. 2 eine vergrößerte Ansicht des Details II gemäß Fig. 1;
Fig. 3 eine Schnittansicht der Lagerbox des Golftrolleys gemäß Fig. 1 in einer Ruhestellung mit in dem Dreh-Gleitlager fixierter Hinterachse;
Fig. 4 eine Schnittansicht gemäß Fig. 3 in einer geöffneten Freigabestellung des Dreh-Gleitlagers;
Fig. 5 eine schaubildliche Ansicht der Lagerbox des Golftrolleys gemäß Fig. 1 von unten in einer geöffneten Freigabestellung gemäß Fig. 4;
Fig. 6 eine schaubildliche Ansicht des Golftrolleys gemäß Fig. 1 beladen mit einer Golftasche;
Fig. 7 eine schaubildliche Ansicht des Golftrolleys gemäß Fig. 1 in einer zusammengeklappten Stellung;
Fig. 8 eine schaubildliche Ansicht eines einfachen Golftrolleys mit einer in einem erfindungsgemäßen Dreh-Gleitlager gelagerten Achse; und
Fig. 9 eine Draufsicht auf den Golftrolley gemäß Fig. 8.

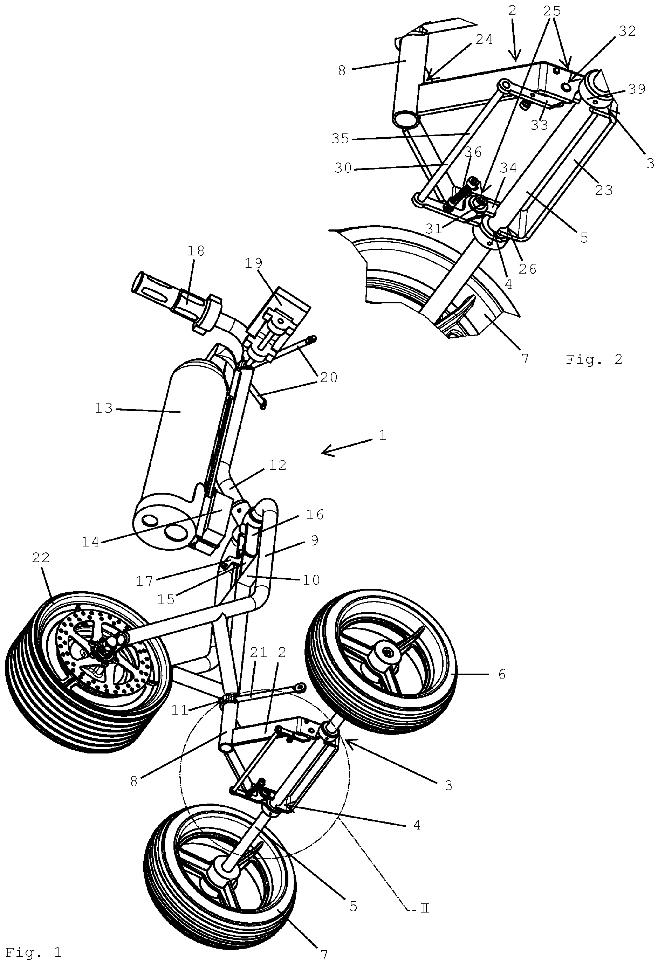

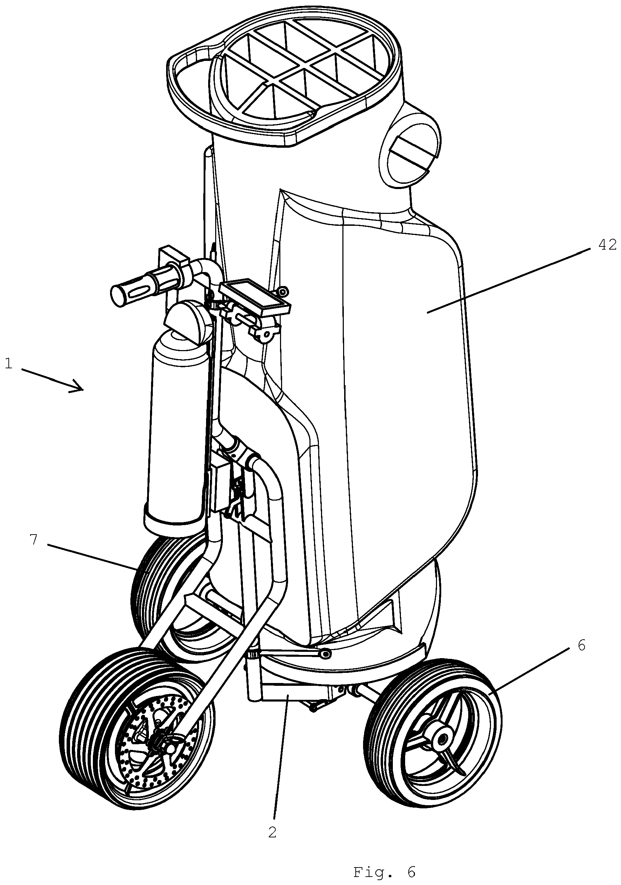

Fig. 1 und 2 zeigen ein Transportmittel in Form eines Golftrolleys 1 mit einer Lagerbox 2, welche zwei erfindungsgemäße Dreh-Gleitlager 3, 4 aufweist. In den Dreh-Gleitlagern 3, 4 ist eine Welle 5 gelagert, welche eine Hinterachse des Golftrolleys 1 bildet. Die Hinterräder 6, 7 sind relativ zur Lagerbox 2 drehbar gelagert. Im Einzelnen sind die Hinterräder 6, 7 mit der Welle 5 verbunden und die Welle 5 ist drehbar in den Drehgleitlagern 3, 4 der Lagerbox 2 gelagert. Die Hinterräder 6, 7 sind bevorzugt jeweils über einen eingebauten Schnellwechselmechanismus (quick release) mit der Welle 5 verbunden, welche die Demontage der Hinterräder 6, 7 von der Welle 5 in kurzer Zeit erlauben und zur effizienten Zerlegung und Kompaktierung des Transportmittels beitragen. Die Oberseite der Lagerbox 2 bildet eine Standfläche zum Abstellen des Transportgutes, z.B. einer Golftasche (vgl. Fig. 6). An ihrer Vorderseite ist die Lagerbox 2 mit einer Führungsstange 8 verbunden, welche ihrerseits über die Querstrebe 10 mit einem Rahmengestell 9 verbunden ist. Die Führungsstange 8 kann im unteren Abschnitt, an dem die Lagerbox 2 montiert ist, drehbar gelagert sein bzw. ein Drehgelenk aufweisen. Zum Zweck des Drehens bzw. Verschwenkens der Lagerbox 2 gegenüber dem Rahmengestell 9 kann in die Führungsstange 8 ein Rohrmotor eingebaut sein. Es versteht sich von selbst, dass auch andere Drehantriebe, manuell oder elektrisch betrieben, mit oder ohne Getriebeausführung, verwendet werden können, damit die Lagerbox 2 mit der angekoppelten Welle 5 der Hinterräder 6, 7 verschwenkt werden kann und dadurch eine Richtungsänderung der Welle 5 und der Hinterräder 6, 7 eingeleitet wird.

Im Falle einer elektrischen Ansteuerung des Drehantriebes kann dies über die am oberen Lenkteil 12 angebrachte Batterie 13 und den Controller 14 erfolgen. Die Ansteuerung eines Rohrmotors und Antriebssystems kann per Funk mit integriertem Funk-Empfänger und Funk-Sender erfolgen. Auch Ansteuerungen über Globale Positionsbestimmungssysteme (GPS) inklusive der Einbindung in ein Navigationssatellitensystem zur Positionsbestimmung der Transportvorrichtung können in der Transportvorrichtung eingesetzt werden. Eine weitere Möglichkeit für die Ansteuerung des Drehantriebes kann mittels Datenübertragung zwischen den einzelnen Geräten über kurze Distanz per Funktechnik erfolgen; dabei sind verbindungslose sowie verbindungsbasierte Signalübertragungen von Punkt zu Punkt und ad-hoc- oder Piconetze, durch eine installierte Funk- Bluetooth Technologie mit dazugehörigen Anwendungssoftwareprogrammen (Apps) denkbar. Beispielsweise kann der Controller 14 über eine Bluetooth Schnittstelle mit einem Rohrmotor kommunizieren. Hauptzweck des Einsatzes von Funktechnik ist das Ersetzen von Kabelverbindungen zwischen den Geräten und Baugruppen der Transportvorrichtung, sodass beim Zusammenklappen keine Gefahr der Beschädigung etwaiger Kabelverbindungen besteht.

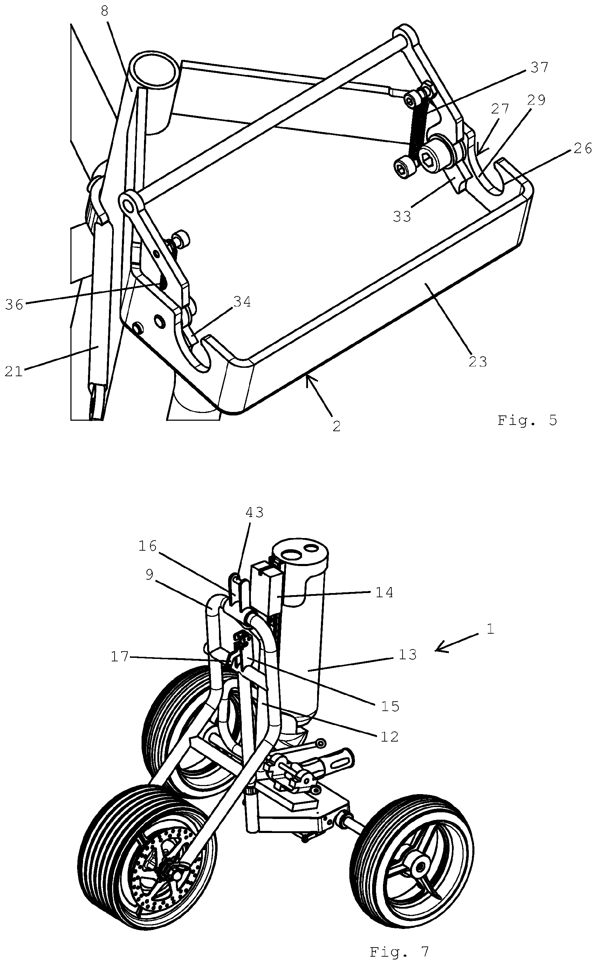

Der obere Lenkteil 12 ist am Rahmengestell 9 schwenkbar gelagert und kann für den Fall des Zusammenlegens der Transportvorrichtung nach vorne oder nach hinten geklappt werden. An der Querstrebe 10 ist der untere Teil 15 einer Verschluss- und Haltevorrichtung fixiert. Der obere Teil 16 der Verschluss- und Haltevorrichtung ist am oberen Lenkteil 12 montiert und verbindet sich im Falle des Aufklappens der Transportvorrichtung in der Endlage gemäß Fig. 1 mit dem unteren Teil 15 der Verschluss- und Haltevorrichtung in der Weise, dass ein federbelasteter Rasthebel 17, welcher am unteren Teil 15 der Verschluss- und Haltevorrichtung angebracht ist, durch einen Querbolzen 43 (vgl. Fig. 7) des oberen Teils 16 der Verschluss- und Haltevorrichtung, ausgelenkt wird und anschließend einrastet und dadurch den Lenkteil 12 kraftschlüssig mit dem Rahmengestell 9 verbindet.

Die am oberen Lenkteil 12 angebrachte Batterie 13 und der Controller 14 können einzeln oder gemeinsam am Lenkteil 12 fixiert sein oder aber auch einzeln oder gemeinsam in einer Box eingebaut sein, welche wiederum am Lenkteil 12 fixiert ist bzw. sind. Eine andere Bauweise des Lenkteils 12 kann so erfolgen, dass der Lenkteil 12 gleichzeitig als Aufnahmebox für Batterie und Controller dient. Zur Inbetriebnahme oder zur Außerbetriebnahme der Transportvorrichtung kann am oberen Lenkteil 12 ein Potentiometer als einstellbares elektrisches Widerstandsbauelement vorgesehen sein. Durch mechanisches Drehen oder Verschieben eines Bedienelements können die Widerstandswerte verändert und damit die Fahrtgeschwindigkeit angepasst werden oder die Inbetriebnahme oder Außerbetriebnahme erwirkt werden. Selbstverständlich können auch Drehgriffsteuerungen 18 verwendet werden. Die Transportvorrichtung kann auch über digitale Steuerungseingaben angesteuert werden, damit eine Geschwindigkeits- und/oder Fahrrichtungsänderung erreicht wird.

Am oberen Ende des Lenkteils 12 kann ein Steuerungsdisplay 19 zur Anzeige der Fahrtgeschwindigkeit, der Batteriespannung und gegebenenfalls anderer, aus dem Fahrbetrieb abgeleiteter Informationen, montiert sein. Auch dient das Lenkteil 12 als Träger einer Stütz- und Halteeinheit 20 für das Transportgut. Eine ähnliche Stütz- und Halteeinheit 21 ist außerdem an der Führungsstange 8 zur Halterung und Fixierung des Transportgutes angebracht. Wird eine lenkbare Ausführung der Welle 5 und Hinterräder 6, 7 gewählt, so muss die Montage und Anbringung der unteren Stütz- und Halteeinheit 21 so gewählt werden, dass die drehbare Lagerbox 2 sich unter dem Transportgut frei bewegen und rotieren kann, damit eine Richtungsänderung eingeleitet werden kann.

Die Transportvorrichtung ist über das am Rahmengestell 9 angebrachte Vorderrad 22 angetrieben. Das Vorderrad 22 wird vorzugsweise elektromechanisch, z.B. mittels eines Gleichstrom- oder Wechselstrommotors, mit oder ohne Getriebe, insbesondere eines Radnabenmotors, angetrieben. Der Antrieb kann über die Batterie 13 und den Controller 14 sowie ein Potentiometer oder den Drehgriff 18 gespeist und die Fahrgeschwindigkeit geregelt werden. Auch nicht-elektromechanisch angetriebene Transportvorrichtungen sind denkbar.

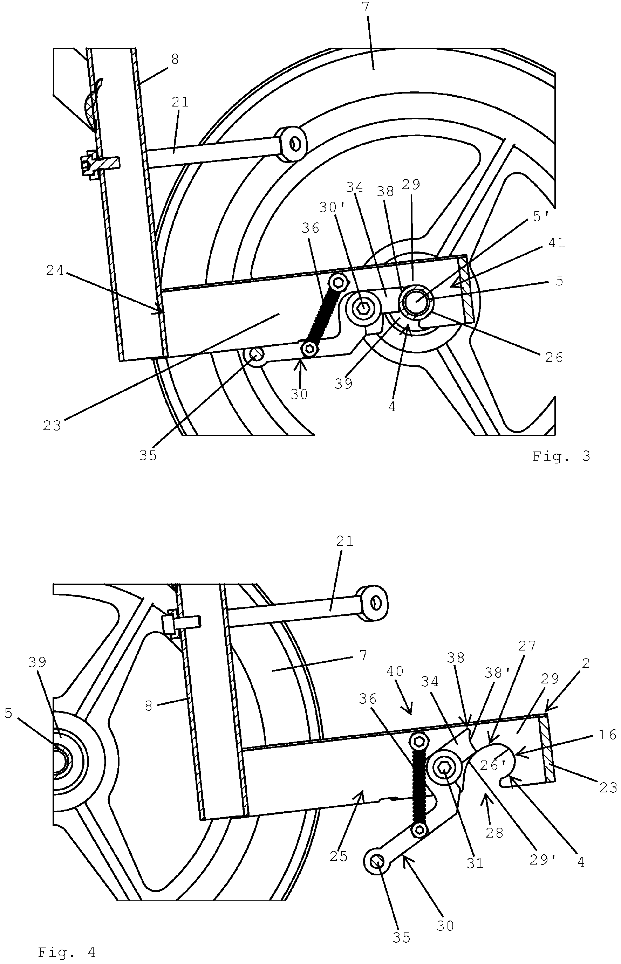

Fig. 2 zeigt die Lagerbox 2 von unten im Detail. Ein wesentliches Kriterium bei einer Transportvorrichtung gemäß Fig. 1 ist die Zerlegbarkeit und Kompaktheit der Bauteile. Demnach ist die Lagerbox 2 vorteilhaft so aufgebaut, dass ein umlaufender Rahmen 23 ausgebildet ist, welcher über eine feste Anbindung 24 mit der Führungsstange 8 verbunden ist. Der umlaufende Rahmen 23 erfüllt mehrere Funktionen. Zur Aufnahme und Lagerung der Welle 5 für die Hinterräder 6, 7 ist in den seitlichen äußeren Wangen 25 des Rahmens 23 ein Ausschnitt mit einer Form oder Kontur vorgesehen, welche eine Teilschale 26 eines Dreh-Gleitlagers 3 bzw. 4 zur Lagerung der Welle 5 bildet. Die Welle 5 wird dabei gleitend an einer Gleitfläche 26' der Teilschale 26 gelagert. Die Ausnehmung (vgl. Fig. 4) bildet eine Führung 27, welche eine Öffnung 28 zur Einführung der Welle 5 (vgl. Fig. 3) aufweist. Die Führung 27 endet in der Teilschale 26 des somit im Rahmen 23 gebildeten statischen Lagerteils 29. Dabei weist die Führung 27 im Wesentlichen gegenüber der Teilschale 26 des statischen Lagerteils 29 einen Anschlag 29' auf. Vorzugsweise weist die Führung 27 ausgehend von der Öffnung 28 bis hin zur Teilschale 26 des statischen Lagerteils 29 einen zumindest abschnittsweise gekrümmten bzw. schneckenförmigen Verlauf auf. Alternativ kann auch ein an zumindest einer Stelle angewinkelter Verlauf der Führung 27 vorgesehen sein. Der kreisförmige Anteil der Kontur des durch die Ausnehmung gebildeten statischen Lagerteils 29, welcher die Teilschale 26 bildet, hat in etwa den Durchmesser der darin zu lagernden Welle 5 und eine Länge, welche etwa dem halben Umfang der zu lagernden Welle 5 entspricht. Anschließend an den kreisförmigen Anteil geht die Kontur in einen sich im Wesentlichen gleichmäßig öffnenden bzw. erweiternden Teil bis zur Öffnung 28 im Rahmens 23 über, so dass der Durchmesser der Öffnung 28 etwa 10-20 Prozent größer als der Durchmesser der Welle 5 ist.

Die Wandstärke des Rahmens 23 im Bereich des statischen Lagerteils 29 ist so gewählt, dass eine ausreichende Gleit- und Lagerfläche für die Lagerung der Welle 5 zur Verfügung gestellt wird. Die Rahmengleitlagerbreite richtet sich nach dem Durchmesser der Welle 5, damit eine optimale Tragfähigkeit erreicht wird. Das Lagerbreitenverhältnisse beträgt zwischen 0,14 und 2,86, vorzugsweise zwischen 0,20 und 1,00, insbesondere zwischen 0,31 und 0,63. Dabei berechnet sich das Lagerbreitenverhältnis als die Summe der Wandstärken ("Breite") des statischen und des mobilen Lagerteils (siehe unten), dividiert durch den Wellendurchmesser. Beispielsweise ergibt sich bei einer Breite des statischen Lagerteils von 5 mm, einer Breite des mobilen Lagerteils von 5 mm und einem Wellendurchmesser von 16 mm ein Lagerbreitenverhältnis von (5 mm + 5 mm)/16 mm = 0,63 (dimensionslos).

Der Lagerdurchmesser (bzw. dementsprechend auch der Wellendurchmesser) ist so auf die vorgesehene Anwendung des Dreh-Gleitlagers abgestimmt, dass die Umfangsgeschwindigkeit zwischen 0,2 und 12 m/s, vorzugsweise zwischen 0,5 und 2,3 m/s, insbesondere zwischen 1,1 und 1,7 m/s, beträgt. Beispielsweise ist bei einer vorgesehenen Transportgeschwindigkeit von 4 km/h ein Wellendurchmesser von 16 mm besonders geeignet, mit dem eine Umfangsgeschwindigkeit von 1,11 m/s erzielt wird.

An den äußeren seitlichen Wangen 25 des Rahmens 23 ist ein beweglicher Bügel 30 um eine Schwenkachse 30' schwenkbar gelagerter. Der Bügel 30 kann über Schraubverbindungen 31 mit den Wangen 25 des Rahmens 23 verbunden sein. Im Bereich der Schraubverbindungen 31 ist im Bügel 30 eine Öffnung mit einem gegenüber der Schraubverbindung 31 jeweils etwas größeren Durchmesser vorgesehen, um eine Drehung oder Auslenkung des Bügels 30 zu ermöglichen. Alternativ kann der Bügel 30 auch mit einer selbstsichernden Schraubenmutter an der Schraubverbindung 31 gesichert sein, wobei sich die Schraube selbst in der entsprechenden Öffnung 32 im Rahmen 23 drehen kann.

Der schwenkbar gelagerte Bügel 30 umfasst mindestens zwei mobile Lagerteile 33, 34, welche über einen Querbolzen 35 miteinander verbunden sind. Die mobilen Lagerteile 33, 34 führen somit eine Drehung oder Verschwenkung um durch die Schraubverbindungen 31 definierte Schwenkachsen 30' bei Betätigung des Bügels 30 gemeinsam und simultan aus. Die mobilen Lagerteile 33, 34 sind zusätzlich über Rückstellelemente 36, 37 (vgl. Fig. 5) in Form von Rückstellfedern mit dem Rahmen 23 verbunden, wobei die Rückstellelemente 36, 37 eingerichtet sind, den Bügel 30 in einer geschlossenen Ruhestellung 41 der Dreh-Gleitlager 3, 4 gemäß Fig. 3 zu halten. Die Rückstellelemente 36, 37 können durch diverse Spannelemente wie mechanische Federn, Stoßdämpfer, luft- oder hydraulische Federn gebildet sein. In der Ruhestellung liegt der Querbolzen 35 am unteren Rand des Rahmens 23 an, sodass eine weitere Verschwenkung des Bügels 30 in Richtung des Rahmens 23 blockiert wird. In dieser Stellung decken die mobilen Lagerteile 33, 34 die schneckenförmige Kontur der statischen Lagerteile 29 so weit ab, dass die Teilschalen 26 der statischen Lagerteile 29 und die an einem Ende der mobilen Lagerteile 33, 34 gebildeten Teilschalen 38 zusammen eine nahezu vollständig umlaufende, kreisförmige Lagerschale ergeben. Die Welle 5 wird dabei gleitend zwischen der Gleitfläche 26' der Teilschale 26 des statischen Lagerteils 29 und der Gleitfläche 38' der Teilschale 38 des mobilen Lagerteils 34 um eine durch das Dreh-Gleitlager 4 definierte Drehachse 5' drehbar gelagert (vgl. Fig. 3).

Wird nun die Lagerbox 2 mit dem umlaufenden Rahmen 23 und dem in seiner Ruhestellung befindlichen Bügel 30 von oben auf die Welle 5 mit den montierten Hinterrädern 6, 7 gedrückt, so werden die mobilen Lagerteile 33, 34 derart nach oben, d.h. in Richtung des Rahmens 23, zurück gedrückt, bis die Welle 5 durch die Öffnung 28 tritt und von der Führung 27 in die Teilschalen 26 der statischen Lagerteile 29 geführt wird und schließlich in der Lagerbox 2 einrastet, d.h. wobei der Bügel aufgrund der Rückstellkraft der Rückstellelemente 36, 37 in die Ruhestellung 41 zurück schnappt.

Die im Rahmen 23 schwenkbar gelagerten mobilen Lagerteile 33, 34 schließen die jeweils zusammen mit den statischen Lagerteilen 29 gebildeten Dreh-Gleitlager 3, 4, sodass der Umfang der Welle 5 zu mindestens 180 Grad, bevorzugt im Bereich zwischen 180 und 270 Grad, von den Teilschalen 26, 38 umfasst beziehungsweise eingeschlossen wird. Die Innenflächen der Teilschalen 38 der mobilen Lagerteile 33, 34 decken ca. 1/3 bis 2/3 des Umfanges der Welle 5 ab und bilden gleichzeitig die Gleitflächen 26', 38' der Dreh-Gleitlager 3, 4 für die rotierende Welle 5.

Damit sich die Welle 5 axial nicht verschieben kann, sind an der Welle 5 Begrenzungsmanschetten 39 angebracht, welche als Gleitflächen am Rahmen 23, welcher als Begrenzungs- und Abstützanschlag gegen axiale Verschiebungen dient, rotieren. Eine axiale Verschiebung kann auch durch andere Maßnahmen, wie z.B. umlaufende Einkerbungen der Welle 5, verhindert werden.

Zur Entkoppelung und Freigabe der Welle 5 wird der Querbolzen 35 des Bügels 30 nach unten, d.h. von der Lagerbox 2 weg, bewegt, wobei die ausgeübte Kraft so groß sein muss, dass die Rückstellkraft der Rückstellelemente 36, 37 überwunden wird und der Bügel 30 in eine Endlage oder Freigabestellung 40 (vgl. Fig. 4) gedrückt wird. In dieser Freigabestellung 40 weichen die Teilschalen 38 der mobilen Lagerteile 33, 34 vollständig von der Welle 5 zurück, sodass eine Sperre der Welle 5 in den Teilschalen 26 der statischen Lagerteile 29 nicht mehr gegeben ist und die Welle 5 mit den montierten Hinterrädern 6, 7, durch die Schwerkraft entlang der Führung 27 aus dem statischen Lagerteil 26 gleitet.

Durch Anheben der Lagerbox 2 mittels des Lenkteils 12 in der Freigabestellung 40 kann umgekehrt erreicht werden, dass die Welle 5 aus den statischen Lagerteilen 29 ausgeworfen wird. Nach dem Loslassen wird der Bügel 30 mittels der Rückstellelemente 36, 37 zurück in die Ausgangslage, d.h. die Ruhestellung 41, gebracht. Soll die Welle 5 wieder eingekoppelt werden, muss der Vorgang wie oben beschrieben neu gestartet werden. Zur Unterstützung des Einkoppelns der Welle 5 können optional an der Lagerbox 2, dem Rahmen 23 und der Welle 5 geeignete Magnete angebracht oder die jeweiligen Teile aus ferromagnetischen Werkstoffen hergestellt sein, sodass die Welle 5 aufgrund der Magnetkraft in die statischen Lagerteile 29 gezogen wird.

Fig. 6 zeigt einen mit einer Golftasche 42 beladenen Golftrolley 1 gemäß Fig. 1. Zur Beförderung der Golftasche 42 wird diese im aufgeklappten Zustand des Golftrolleys 1 auf die Standfläche oder auf die Lagerbox 2 gestellt, welche gleichzeitig auch die Aufnahme und Verbindung zu den Hinterrädern 6, 7 darstellt.

In Fig. 7 ist der Golftrolley 1 gemäß Fig. 1 und 6 in einem eingeklappten Zustand dargestellt, d.h. mit nach hinten in Richtung der Lagerbox 2 geklapptem Lenkteil 12. Zur Überführung in diese Stellung wurde der Rasthebel 17 des unteren Teils 15 der Verschluss- und Haltevorrichtung betätigt und somit vom Querbolzen 43 des oberen Teils 16 der Verschluss- und Haltevorrichtung abgehoben, sodass der schwenkbar am Rahmengestell 9 gelagerte Lenkteil 12 freigegeben wurde und nach hinten in die in Fig. 7 gezeigte Stellung verschwenkt werden konnte.

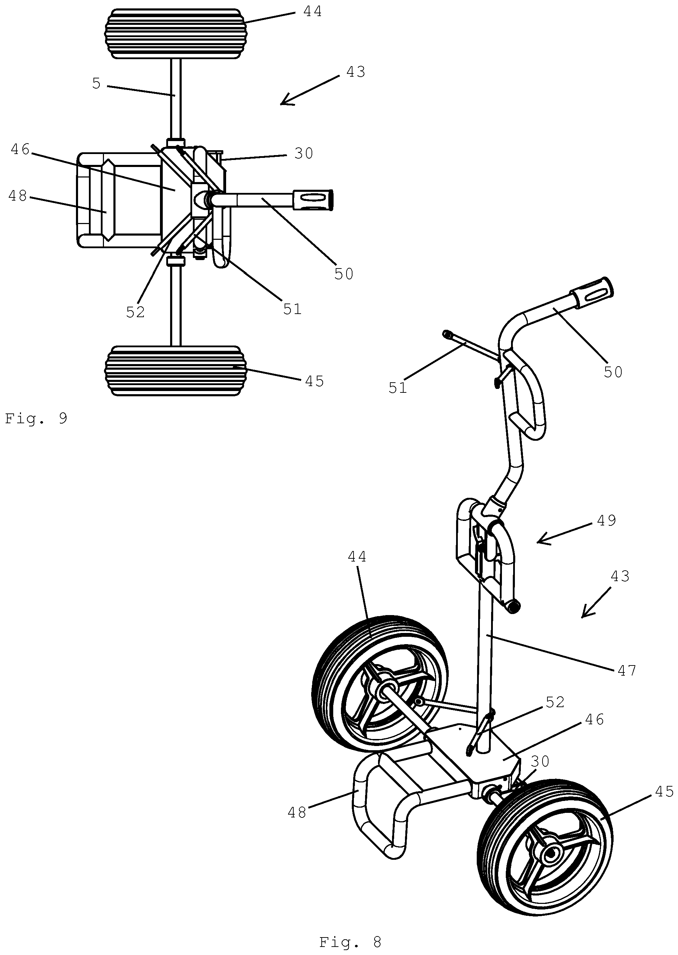

In Fig. 8 und 9 ist eine einfachere Variante eines Golftrolleys 43 gezeigt. Dieser umfasst eine hinsichtlich der Kupplung der Welle 5 der Räder 44, 45 mit der Lagerbox 2 gemäß der vorangehenden Beispiele im Wesentlichen identische Lagerbox 46. Mit der Lagerbox ist eine Führungsstange 47 fest verbunden. Anstelle eines Rahmengestells mit einem Vorderrad ist mit der Lagerbox 46 zudem eine Abstelleinrichtung 48 verbunden, mit welcher der Golftrolley 43 in einer aufrechten Stellung abgestützt wird. Die Abstelleinrichtung 48 bildet an der Oberseite zugleich eine Stellfläche für eine Golftasche (nicht gezeigt). An der der Abstelleinrichtung 48 gegenüber liegenden Vorderseite der Lagerbox 46 ist ein Bügel 30 zur Freigabe der Dreh-Gleitlager 3, 4 ersichtlich, wobei hinsichtlich der funktionellen Einzelheiten des Bügels 30 und seiner Verschwenkung zur Vermeidung von Wiederholungen auf die vorangehenden Beispiele gemäß Fig. 1-5 verwiesen wird. Mit der Führungsstange 47 ist über eine sperrbare Klappverbindung 49 mit einem Lenkteil 50 verbunden, wobei sowohl am Lenkteil 50 als auch an der Führungsstange 47 Stützeinheiten 51, 52 zur Abstützung einer transportierten Golftasche vorgesehen sind.

## Patentansprüche

1. Dreh-Gleitlager (4) mit einem statischen Lagerteil (29) und einem mobilen Lagerteil (34), welche jeweils eine Teilschale (26, 38) mit einer Gleitfläche (26', 38') aufweisen, wobei die Gleitflächen (26', 38') der Lagerteile (26, 38) relativ zur Drehachse (5') in Drehrichtung des Dreh-Gleitlagers (4) jeweils innerhalb eines Winkelbereichs von höchstens 180° angeordnet sind und in einer geschlossenen Ruhestellung (41) des Dreh-Gleitlagers (4) die Teilschalen (26, 38) aller Lagerteile (29, 34) zusammen eine Lagerbuchse des Dreh-Gleitlagers (4) bilden,
wobei der mobile Lagerteil (34) zur Öffnung des Dreh-Gleitlagers (4) gegenüber dem statischen Lagerteil (29) um eine Schwenkachse (30') verschwenkbar angeordnet ist, sodass in einer geöffneten Freigabestellung (40) des Dreh-Gleitlagers (4) eine darin gelagerte Welle (5) freigegeben ist,
wobei der mobile Lagerteil (34) so geformt ist, dass aufgrund der Position seiner Gleitfläche (38') relativ zur Drehachse (5') in der geschlossenen Ruhestellung (41) eine Translation einer im Dreh-Gleitlager (4) aufgenommenen Welle (5) quer zur Drehachse (5') und in Richtung der Schwenkachse (30') des mobilen Lagerteils (34) oder in die Gegenrichtung verhindert wird, **dadurch gekennzeichnet, dass** der statische Lagerteil (29) einen Anschlag (29') aufweist, welcher in der geöffneten Freigabestellung (40) des Dreh-Gleitlagers (4) eine geradlinige Translation einer im Dreh-Gleitlager (4) aufgenommenen Welle (5) quer zur Drehachse (5') und aus der Teilschale (26) des statischen Lagerteils (29) begrenzt.

2. Dreh-Gleitlager (4) nach Anspruch 1, **dadurch gekennzeichnet, dass** der statische Lagerteil (29) eine Führung (27) bildet, welche eine Öffnung (28) zur Einführung einer Welle (5) in den statischen Lagerteil (29) aufweist, und welche in der Teilschale (26) des statischen Lagerteils (29) endet, wobei die Führung (27) einen zumindest abschnittsweise schneckenförmigen Verlauf aufweist.

3. Dreh-Gleitlager (4) nach einem der Ansprüche 1 oder 2, **dadurch gekennzeichnet, dass** der mobile Lagerteil (34) aus der geschlossenen Ruhestellung (41) des Dreh-Gleitlagers (4) nur in Richtung der geöffneten Freigabestellung (40) des Dreh-Gleitlagers (4) verschwenkbar ist.

4. Dreh-Gleitlager (4) nach einem der Ansprüche 1 bis 3, **dadurch gekennzeichnet, dass** die Gleitflächen (26', 38') des statischen und des mobilen Lagerteils (29, 34) einen durchgehenden, in der Ruhestellung (41) relativ zur Drehachse (5') des Dreh-Gleitlagers (4) kreisbogenförmigen Verlauf aufweisen.

5. Dreh-Gleitlager (4) nach Anspruch 4, **dadurch gekennzeichnet, dass** die Gleitfläche (26') des statischen Lagerteils (29) relativ zur Drehachse (5') des Dreh-Gleitlagers (4) einen halbkreisförmigen Verlauf aufweist.

6. Dreh-Gleitlager (4) nach einem der Ansprüche 1 bis 5, **dadurch gekennzeichnet, dass** der mobile Lagerteil (34) gegen die Rückstellkraft eines Rückstellelements (36) aus der Ruhestellung (41) verschwenkbar ist.

7. Dreh-Gleitlager (4) nach Anspruch 6, **dadurch gekennzeichnet, dass** das Rückstellelements (36) eine Rückstellfeder ist.

8. Dreh-Gleitlager (4) nach Anspruch 7, **dadurch gekennzeichnet, dass** der mobile Lagerteil (34) an einem Ende eines zweiarmigen Hebels gebildet ist.

9. Dreh-Gleitlager (4) nach Anspruch 8, **dadurch gekennzeichnet, dass** der Durchmesser der Führung (27) zur Öffnung (28) hin zunimmt, vorzugsweise um 10-20 % zunimmt.

10. Vorrichtung mit zumindest zwei Dreh-Gleitlagern (3, 4) nach einem der Ansprüche 1 bis 9, wobei die zumindest zwei Dreh-Gleitlager (3, 4) eine gemeinsame Drehachse (5') aufweisen.

11. Vorrichtung nach Anspruch 10, **dadurch gekennzeichnet dass** der mobile Lagerteil (33, 34) der zumindest zwei Dreh-Gleitlager (3, 4) jeweils an einem Ende eines zweiarmigen Hebels gebildet ist, wobei die den mobilen Lagerteilen (33, 34) gegenüber liegenden Enden der Hebel mit einem gemeinsamen Betätigungsbügel, insbesondere in Form eines Querbolzens (35) parallel zur Drehachse (5'), verbunden sind.

12. Vorrichtung nach Anspruch 10 oder 11, **dadurch gekennzeichnet, dass** der statische Lagerteil (29) der zumindest zwei Dreh-Gleitlager (3, 4) jeweils eine Führung (27) bildet, welche eine Öffnung (28) zur Einführung einer Welle (5) in den statischen Lagerteil (29) aufweist und welche in der Teilschale (26) des statischen Lagerteils (29) endet, wobei die Öffnungen (28) der Führungen (27) der zumindest zwei Dreh-Gleitlager (3, 4) an einer Unterseite der Vorrichtung angeordnet sind.

13. Verwendung der Vorrichtung nach einem der Ansprüche 10 bis 12 zur Aufnahme und Entnahme einer Welle (5) mit zwei Rädern (6, 7) eines Golftrolleys (1).

14. Verwendung nach Anspruch 13, **dadurch gekennzeichnet, dass** der Golftrolley (1) ein zusätzliches angetriebenes Rad (22) aufweist.

15. Golftrolley (1) mit einem Fahrgestell, das mindestens drei Räder (6, 7, 22) an mindestens zwei Achsen lagert, von denen eine Achse durch eine frei drehbar gelagerte Welle (5) gebildet ist, wobei die Welle (5) in zwei Schnapplagern herausnehmbar am Fahrgestell gelagert ist, **dadurch gekennzeichnet, dass** das Fahrgestell eine Vorrichtung nach einem der Ansprüche 10 bis 12 ist, wobei die beiden Dreh-Gleitlager (3, 4) die Schnapplager zur Lagerung der frei drehbar gelagerten Welle (5) bilden.

## Claims

1. A rotational sliding bearing (4) having a static bearing part (29) and a mobile bearing part (34), each having a sub-shell (26, 38) with a sliding surface (26', 38'), wherein the sliding surfaces (26', 38') of the bearing parts (26, 38) are each arranged within an angular range of max. 180° relative to the rotational axis (5') in the direction of rotation of the rotational sliding bearing (4), and in a closed rest position (41) of the rotational sliding bearing (4), the sub-shells (26, 38) of all bearing parts (29, 34) together form a bearing bush of the rotational sliding bearing (4),
wherein the mobile bearing part (34) is arranged such that it can pivot relative to the static bearing part about a pivot axis (30') for opening the rotational sliding bearing (4), such that a shaft (5) mounted in the rotational sliding bearing (4) is released in an open release position (40) thereof,
wherein the mobile bearing part (34) is shaped such that, based on the position of the sliding surface (38') thereof relative to the rotational axis (5'), in the closed rest position (41), a translation of a shaft (5) accommodated in the rotational sliding bearing (4) is prevented in a transverse direction to the rotational axis (5') and in the direction of the pivot axis (30') of the mobile bearing part (34) or in the opposite direction,
**characterized in that** the static bearing part (29) has a stop (29') which, in the open release position (40) of the rotational sliding bearing (4), limits a straight-line translation of a shaft (5) accommodated in the rotational sliding bearing (4) in a transverse direction to the rotational axis (5') and out of the sub-shell (26) of the static bearing part (29).

2. The rotational sliding bearing (4) according to claim 1, **characterized in that** the static bearing part (29) forms a guideway (27) which has an opening (28) for the insertion of a shaft (5) into the static bearing part (29), and which ends in the sub-shell (26) of the static bearing part (29), wherein the guideway (27) has a spiral structure at least in sections.

3. The rotational sliding bearing (4) according to any one of claims 1 or 2, **characterized in that** the mobile bearing part (34), from the closed rest position (41) of the rotational sliding bearing (4), can be pivoted only in the direction of the open release position (40) of the rotational sliding bearing (4).

4. The rotational sliding bearing (4) according to any one of claims 1 to 3, **characterized in that** the sliding surfaces (26', 38') of the static and mobile bearing parts (29, 34) in the rest position (41) have a continuous circular-arc-shaped structure relative to the rotational axis (5') of the rotational sliding bearing (4).

5. The rotational sliding bearing (4) according to claim 4, **characterized in that** the sliding surface (26') of the static bearing part (29) has a semicircular structure relative to the rotational axis (5') of the rotational sliding bearing (4).

6. The rotational sliding bearing (4) according to any one of claims 1 to 5, **characterized in that** the mobile bearing part (34) can be pivoted from the rest position (41) against the reset force of a resetting element (36).

7. The rotational sliding bearing (4) according to claim 6, **characterized in that** the resetting element (36) is a return spring.

8. The rotational sliding bearing (4) according to claim 7, **characterized in that** the mobile bearing part (34) is formed at an end of a two-arm lever.

9. The rotational sliding bearing (4) according to claim 8, **characterized in that** the diameter of the guideway (27) increases towards the opening (28), preferably increases by 10 to 20 percent.

10. A device having at least two rotational sliding bearings (3, 4) according to any one of claims 1 to 9, wherein said at least two rotational sliding bearings (3, 4) have a joint rotational axis (5').

11. The device according to claim 10, **characterized in that** the mobile bearing part (33, 34) of said at least two rotational sliding bearings (3, 4) is formed at an end of a two-arm lever each, wherein the ends of the lever opposite the mobile bearing parts (33, 34) are connected with a joint actuation bracket, especially in the form of a transverse bolt (35) parallel to the rotational axis (5').

12. The device according to claim 10 or 11, **characterized in that** the static bearing part (29) of said at least two rotational sliding bearings (3, 4) each forms a guideway (27) which has an opening (28) for the insertion of a shaft (5) into the static bearing part (29), and which ends in the sub-shell (26) of the static bearing part (29), wherein the openings (28) of the guideways (27) of said at least two rotational sliding bearings (3, 4) are arranged at a bottom side of the device.

13. Use of the device according to any one of claims 10 to 12 to accommodate and remove a shaft (5) with two wheels (6, 7) of a golf trolley (1).

14. The use according to claim 13, **characterized in that** the golf trolley (1) has an additional driven wheel (22).

15. A golf trolley (1) with a chassis which supports at least three wheels (6, 7, 22) at a minimum of two axles, one axle of which is formed by a freely pivot-mounted shaft (5), wherein the shaft (5) is held removably at the chassis by two snap-action bearings, **characterized in that** the chassis is a device according to any one of claims 10 to 12, wherein the two rotational sliding bearings (3, 4) form the snap-action bearings to hold the freely pivot-mounted shaft (5) .

## Revendications

1. Palier lisse rotatif (4) avec une partie de palier statique (29) et une partie de palier mobile (34), qui comprennent chacune une coque partielle (26, 38) avec une surface de glissement (26', 38'), les surfaces de glissement (26', 38') des parties de palier (26, 38) étant disposées, par rapport à l'axe de rotation (5') dans le sens de rotation du palier lisse rotatif (4), chacune à l'intérieur d'une plage angulaire de 180° maximum et, dans une position de repos fermée (41) du palier lisse rotatif (4), les coques partielles (26, 38) de toutes les parties du palier (29, 34) forment ensemble une douille de palier du palier lisse rotatif (4),
la partie de palier mobile (34) étant disposée de manière pivotante autour d'un axe de pivotement (30') par rapport à la partie de palier statique (29) pour l'ouverture du palier lisse rotatif (4), de façon à ce que, dans une position de libération ouverte (40) du palier lisse rotatif (4), un arbre (5) logé à l'intérieur soit libéré,
la partie de palier mobile (34) étant formée de façon à ce que, du fait de la position de sa surface de glissement (38') par rapport à l'axe de rotation (5') dans la position de repos fermée (41), une translation d'un arbre (5) logé dans le palier lisse rotatif (4) transversalement par rapport à l'axe de rotation (5') et en direction de l'axe de pivotement (30') de la partie de palier mobile (34) ou dans la direction opposée, soit empêchée,
**caractérisé en ce que** la partie de palier statique (29) comprend une butée (29') qui, dans la position de libération ouverte (40) du palier lisse rotatif (4), limite une translation en ligne droite d'un arbre (5) logé dans le palier lisse rotatif (4) transversalement par rapport à l'axe de rotation (5') et hors de la coque partielle (26) de la partie de palier statique (29).

2. Palier lisse rotatif (4) selon la revendication 1, **caractérisé en ce que** la partie de palier statique (29) forme un guidage (27), qui comprend une ouverture (28) pour l'introduction d'un arbre (5) dans la partie de palier statique (29) et qui se termine dans la coque partielle (26) de la partie de palier statique (29), le guidage (27) présentant, au moins à certains endroits, un tracé en forme de vis sans fin.

3. Palier lisse rotatif (4) selon l'une des revendications 1 ou 2, **caractérisé en ce que** la partie de palier mobile (34) peut être pivotée de la position de repos fermée (41) du palier lisse rotatif (4) uniquement en direction de la position de libération ouverte (40) du palier lisse rotatif (4).

4. Palier lisse rotatif (4) selon l'une des revendications 1 à 3, **caractérisé en ce que** les surfaces de glissement (26', 38') des parties de palier statique et mobile (29, 34) présentent un tracé continu, en forme d'arc de cercle dans la position de repos (41) par rapport à l'axe de rotation (5') du palier lisse rotatif (4).

5. Palier lisse rotatif (4) selon la revendication 4, **caractérisé en ce que** la surface de glissement (26') de la partie de palier statique (29) présente, par rapport à l'axe de rotation (5') du palier lisse rotatif (4), un tracé de forme semi-circulaire.

6. Palier lisse rotatif (4) selon l'une des revendications 1 à 5, **caractérisé en ce que** la partie de palier mobile (34) peut être pivotée hors de la position de repos (41) à l'encontre de la force de rappel d'un élément de rappel (36).

7. Palier lisse rotatif (4) selon la revendication 6, **caractérisé en ce que** l'élément de rappel (36) est un ressort de rappel.

8. Palier lisse rotatif (4) selon la revendication 7, **caractérisé en ce que** la partie de palier mobile (34) est formée à une extrémité d'un levier à deux bras.

9. Palier lisse rotatif (4) selon la revendication 8, **caractérisé en ce que** le diamètre du guidage (27) augmente en direction de l'ouverture (28), de préférence de 10 à 20 %.

10. Dispositif avec au moins deux paliers lisses rotatifs (3, 4) selon l'une des revendications 1 à 9, les au moins deux paliers lisses rotatifs (3, 4) comprenant un axe de rotation (5') commun.

11. Dispositif selon la revendication 10, **caractérisé en ce que** les parties de paliers mobiles (33, 34) des au moins deux paliers lisses rotatifs (3, 4) sont formées chacune à une extrémité d'un levier à deux bras, les extrémités des leviers disposées en face des parties de paliers mobiles (33, 34) étant reliées avec un étrier d'actionnement commun, plus particulièrement sous la forme d'une broche transversale (35) parallèle à l'axe de rotation (5').

12. Dispositif selon la revendication 10 ou 11, **caractérisé en ce que** la partie de palier statique (29) des au moins deux paliers lisses rotatifs (3, 4) forme un guidage (27), qui comprend une ouverture (28) pour l'introduction d'un arbre (5) dans la partie de palier statique (29) et qui se termine dans la coque partielle (26) de la partie de palier statique (29), les ouvertures (28) des guidages (27) des au moins deux paliers lisses rotatifs (3, 4) étant disposées sur un côté inférieur du dispositif.

13. Utilisation du dispositif selon l'une des revendications 10 à 12 pour le logement et le retrait d'un arbre (5) avec deux roues (6, 7) d'un chariot de golf (1).

14. Utilisation selon la revendication 13, **caractérisée en ce que** le chariot de golf (1) comprend une roue entraînée supplémentaire (22).

15. Chariot de golf (1) avec un châssis qui loge au moins trois roues (6, 7, 22) au niveau d'au moins deux essieux, dont un essieu est constitué d'un arbre (5) logé de manière librement rotative, l'arbre (5) étant logé dans deux paliers à encliquetage de manière amovible sur le châssis, **caractérisé en ce que** le châssis est un dispositif selon l'une des revendications 10 à 12, les deux paliers lisses rotatifs (3, 4) formant les paliers à encliquetage pour le logement de l'arbre (5) logé de manière librement rotative.
